Europäisches Patentamt

(19) European Patent Office

Office européen des brevets

(11) Publication number: **0 202 909**
**B1**

# EUROPEAN PATENT SPECIFICATION

(45) Date of publication of patent specification:
09.08.89

(51) Int. Cl.⁴: **F 16 J 15/10**

(21) Application number: 86303799.0

(22) Date of filing: 19.05.86

(54) Elastomeric seal assembly.

(30) Priority: 20.05.85 US 736050

(43) Date of publication of application:
26.11.86 Bulletin 86/48

(45) Publication of the grant of the patent:
09.08.89 Bulletin 89/32

(84) Designated contracting states:
DE FR GB

(56) References cited:
EP–A– 0 041 906
DE–A– 1 600 493
DE–A– 2 004 046
DE–A– 2 322 745

(73) Proprietor: PARKER HANNIFIN CORPORATION
17325 Euclid Avenue
Cleveland Ohio 44112 (US)

(72) Inventor: Jelinek, Jerry G.
741 Wedgewood Lane
La Habra California 90631 (US)

(74) Representative: Purvis, William Michael Cameron et al
D. Young & Co. 10 Staple Inn
London WC1V 7RD (GB)

## Description

The invention relates to an elastomeric seal assembly and has particularly though not exclusive application to a retainer-supported adjustable assembly which includes a selectable shim feature therein.

It is often necessary to seal devices which have interfacial gaps or separations such as components of an engine, turbine or similar power train-like mounting or assembly. However, a major problem confronting the designer and assembler is the « stack-up » of tolerances of the various components, often requiring selective assembly and/or customized shimming. This, in turn, can create some very difficult sealing problems because of the varying gaps or separations occurring as a result of these tolerances or misalignments.

Currently, one way this situation is handled is to provide the installer with differently dimensioned seal assemblies so that he can measure the gap dimension and select an appropriately sized assembly. Another technique is to provide a « nominal » seal assembly and a plurality of shims, from which the installer can select. It is apparent though that these techniques create additional burdens upon the installer who must have the various components at hand and ensure that their installation is made correctly and compatibly.

Patent Specification EP-A-41906 discloses a seal assembly comprising a rigid annular member of determined thickness having an elastomeric sealing ring at its inner periphery, the sealing ring being of greater axial thickness then the thickness of the rigid annular member.

Patent Specification DE-A-2 004 046 discloses a sealing member comprising an outer rigid annular member, an elastomeric sealing ring at the inner periphery of the rigid annular member and a mounting member for the sealing ring, the mounting member being annular and comprising an inner dished or angled flange moulded into the sealing ring and an outer flange laminated with the rigid annular member with the axial thickness of the sealing ring exceeding the combined thickness of the outer flange of the mounting member and the rigid annular member.

According to the invention there is provided an elastomeric seal assembly to be positioned in a gap between complementary faces of a device to be sealed and comprising a retainer and an elastomeric seal joined together in combination, the gap having a predetermined nominal gap dimension, the retainer comprising a substrate section of a configuration to fit the gap to provide an interface between the complementary faces and the substrate section having a thickness substantially the same as the nominal gap dimension,
characterised in that
tolerances in the gap dimension provide the possibilities of a maximum gap dimension greater than the nominal gap dimension and a minimum gap dimension smaller than the nominal gap dimension ;

the elastomeric seal has a thickness greater than the maximum gap dimension and no greater than will provide suitable sealing at the minimum gap dimension ; and

the retainer further comprises a shim section, the shim section comprising a plurality of shim layers removably joined together and the shim section being removably joined to the substrate section and having a thickness such that the overall thickness of the substrate section and the shim section is initially substantially the same as the maximum gap dimension and one or more of the shim layers can be peeled off to reduce the overall thickness as required down to the minimum gap dimension.

Thus an elastomeric seal member is combined with an adjustable retainer structure in a unitary assembly which can be conveniently modified by the installer. The retainer comprises a metal or plastics substrate of fixed thickness which serves as and is equal to the minimum gland or groove depth. This substrate, in turn, is surmounted by plied-up layers of thin, bonded-in-place shims, each on the order of a few tenths of a millimetre (thousandths of an inch) thick. Significantly, the total stack height of this hybrid combination of plies and substrate equals the maximum gland or groove depth for the elastomeric seal member attached thereto.

The seal member itself may be circular, square, oval, rectangular or other suitable shape in cross sectional to suit any particular application. However, the overal height of the seal member is predetermined to provide the optium squeeze over the maximum to minimum range of the retainer for effective static sealing. Furthermore, the seal member can be moulded in place during seal vulcanization, being either chemically or mechanically attached in the process, or it can be installed later, again by bonding or attaching it to the hybrid retainer stack.

It is now a simple matter for an installer to measure the interfacial gap or groove occurring in the structure to be sealed. He can then select an appropriate seal assembly having a desired range and peel off layers as required to obtain the correct retainer thickness. Since the seal cross section is dimensioned to perform effectively within the entire range of the retainer, the resultant structure can be confidently installed in the gap for a close and sealed fit. Both shimming and sealing are thus accomplished with this integrated device while the variables of mismatching and component non-availability are removed from the installer.

The invention is diagrammatically illustrated by way of example with reference to the accompanying drawing, in which :

Figure 1 is a partial sectional view of a seal assembly according to the invention shown in relation to a part of a structure to be sealed;

Figure 2 is a plan view of a second embodiment of a seal assembly according to the invention;

Figure 3 is a partial sectional view of the seal assembly of Figure 2, taken on line 3-3; and

Figure 4 is a view similar to that of Figure 3 of a third embodiment of seal assembly according to the invention.

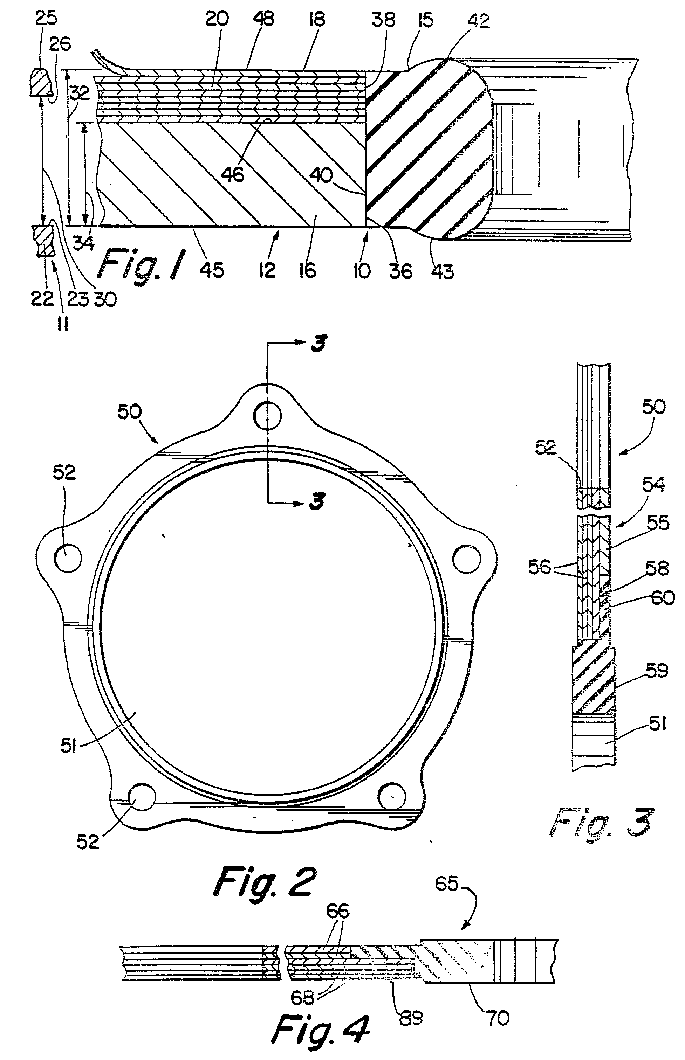

Referring to the drawings and initially to Figure 1, a first embodiment of a seal assembly 10 is shown in relation to a structure 11 to be sealed, the seal assembly 10 comprising a retainer 12 and an elastomeric seal member 15. The retainer 12, in turn, comprises a substrate section 16 and a shim section 18, the shim section 18 being made up by a plurality of shim layers 20.

The structure 11 may for example comprise a body member 22 having a sealing surface 23 thereon and which also includes an opening through which a drive shaft or the like might protrude (not shown) and which is to be sealed by the seal member 15. The remainder of the structure 11 is a cover plate or the like 25 which includes a sealing surface 26 complementary to the surface 23 and which forms a gap therebetween, having a thickness or width depicted by an arrow 30.

While the gap depicted by the arrow 30 is the actual size of the space between the surfaces 23, 26 and is determined by other parameters of the structure 11 which define such spacing, in practice the spacing of the surfaces 23, 26 is designed to fall within a range of tolerance shown by arrows in Figure 1 as a maximum gap depth 32 and a minimum gap depth 34. It is incumbent upon an installer of a seal assembly to select one which would fit the gap 30 or to use shims or the like to modify a seal assembly to suit such an application. The seal assembly of the invention can radically modify the procedure and enhance the integrity thereof. Rather than selecting or adding to a selected seal structure, the installer uses a standard seal assembly 10 which is suitable for all applications which fall within a specified tolerance range and removes portions of the assembly 10 as necessary to conform to the particular gap 30 required.

This expedient is provided by the plurality of shim layers 20 which are mounted upon the substrate 16 and which may be peeled as required and removed from the seal assembly 10. The substrate 16 is typically a metal plate although it might be one of many forms of plastics, and is fairly rigid, but flexible, to provide support for the remainder of the seal assembly 10. The substrate 16 has a configuration suitable to match the corresponding configuration of the mating surface 23 to be sealed, and in this embodiment includes an opening formed by a cylindrical wall 36. Typically, the substrate 16 has a thickness of approximately 0.76mm (0.030 inch) and is surmounted in turn by the several shim layers, each typically on the order of a few tenths of a millimetre (thousandths of an inch). In this example, eight shim layers 20 are depicted, so that the shim section 18 overall thickness might be 0.45 mm (0.018 inch) and the overall retainer 12 thickness 1.22 mm (0.048 inch). The shim layers 20 conform substantially, although not necessarily, to the planar shape of the underlying substrate 16 and terminate at an opening to form a cylindrical wall 38 coextensive with the cylindrical wall 36 of the substrate 16. Bonded to the walls 36, 38 is the seal member 15 which is of generally doughnut shape having an outer peripheral cylindrical surface 40 in engagement with the walls 36, 38 and raised crown surfaces 42, 43 joined at the inner periphery, the crown surfaces providing the sealing surfaces for the seal assembly 10. The crown surfaces 42, 43 project outwardly respectively, of the outermost of the shim layers 20 and the lower surface 45 of the substrate.

The substrate 16 is dimensioned in thickness so that the separation between the upper surface 46 of the substrate and the lower surface 45 is substantially the same as the minimum gap depth 34 of the structure 11. The several shim layers 20 are dimensioned so that the outer surface 48 of the outermost shim layer 20 is at a dimension substantially equal to the maximum gap depth 32 or stated another way, the combined thickness of the substrate 16 and the shim section 18 is equal to the maximum gap depth 32. It will be apparent then, that one or more of the shim layers 20 may be removed from the stack constituting the shim section 18 to match the dimension of the actual gap 30, or as close as can be effected by the selection of thicknesses of the shim layers 20. Preferably, all of shim layers 20 are of the same thickness to make selection easy for the installer, however, other thickness combinations could be used as well.

It is significant to note that the seal member 15 must be designed as well to seal between the surfaces 23, 26 at the maximum or minimum gap depths 32, 34 respectively. Rubber is preferred for the seal member 15, however, many other elatomers could provide suitable distortion or compression characteristics to suit the purpose and various seal shapes other than the depicted, generally circular crown surfaces 42, 43 would work effectively.

In the embodiment of Figure 1, the shim layers 20 are thin metal plates and are adhesively joined to one another and to the substrate 16. The seal member 15 is moulded in place to the substrate 16 and the shim section 18 with the bond being achieved during vulcanization. However, it should be apparent that the entire structure of the seal assembly 10 could be bonded into an integral unit simultaneously during vulcanization utilizing a heat settable adhesive for the shim layers 20 or that very many other variations could be made.

Yet another variation of the invention is depicted in Figures 2 and 3 where a generally circular seal assembly 50 having an opening 51 therein is configured for sealing about a shaft or the like. Bolt hole openings 52 are provided for clamping bolts to secure the assembly 50 between planar

structures having a nominal gap spacing. The seal assembly 50 comprises a flat retainer 54 made up of a substrate plate 55 and a plurality of shim plates 56. In this embodiment, the shim plates 56 extend inwardly into the opening 51 further than the substrate plate 55 thereby forming a step 58 therebetween. A seal member 59 is generally rectangular in section as seen in Figure 3 and includes a shoulder 60 at its outer periphery which fits within the step 58 to provide improved mechanical inter-engagement with the retainer 54. The seal member 59, again, may be moulded in place and bonded to the substrate plate 55 as well as to the shim plates 56 or may be otherwise secured, for example, simply by the mechanical engagement. The seal assembly 50 is otherwise similar to the seal assembly 10 described in relation to Figure 1. The substrate plate 55 is dimensioned to have a thickness equal to a desired minimum gap depth and the thickness of the entire retainer 54 is dimensioned to be equal to the maximum gap depth, so that the shim plates 56 can be peeled and discarded, as required, to match an actual gap dimension.

A slightly different structure is shown in Figure 4 which is a view taken in section similar to that of Figure 3. In this embodiment, a seal assembly 65 comprises a retainer having a laminated substrate formed of identical plates 66, surmounted by a plurality of shim plates 68, again forming a step 69 therebetween. A seal member 70 is moulded in place at the step 69 and at the inner peripheries of the substrate plates 66 and shim plates 68 and provides a generally rectangular seal configuration for sealing between spaced plates, flanges or the like. The shim plates 68 may be removed as by peeling to fit a particular dimension, as previously described. In this embodiment, the entire laminated structure provides a convenient form of manufacture whereby the entire seal assembly 65 may be integrated into a common structure in a single joining step using similar laminated sections for both the substrate plates 66 and the shim plates 68.

## Claims

1. An elastomeric seal assembly (10, 50, 65) to be positioned in a gap between complementary faces (23, 26) of a device (22, 25) to be sealed and comprising a retainer (12, 54, 66) and an elastomeric seal (15, 59, 70) joined together in combination, the gap having a predetermined nominal gap dimension (30), the retainer (12, 54, 66) comprising a substrate section (16) of a configuration to fit the gap to provide an interface between the complementary faces (23, 26) and the substrate section (16) having a thickness substantially the same as the nominal gap dimension (30), characterised in that

tolerances in the gap dimension provide the possibilities of a maximum gap dimension (32) greater than the nominal gap dimension and a minimum gap dimension (34) smaller than the nominal gap dimension (30);

the elastomeric seal (15, 59, 70) has a thickness greater than the maximum gap dimension (32) and no greater than will provide suitable sealing at the minimum gap dimension (34); and

the retainer (12, 54, 66) further comprises a shim section (18), the shim section (18) comprising a plurality of shim layers (20, 56, 68) removably joined together and the shim section (18) being removably joined to the substrate section (16) and having a thickness such that the overall thickness of the substrate section (16) and the shim section (18) is initially substantially the same as the maximum gap dimension (32) and one or more of the shim layers (20, 56, 68) can be peeled off to reduce the overall thickness as required down to the minimum gap dimension (32).

2. An elastomeric seal assembly according to claim 1, wherein the elastomeric seal (15, 59, 70) is joined both to the substrate section (16) and the shim section (18).

3. An elastomeric seal assembly according to claim 2, wherein the elastomeric seal (15, 59, 70) is a moulded-in-place seal and is bonded to the substrate section (16) and the shim section (18).

4. An elastomeric seal assembly according to claim 1, wherein the retainer (12, 54, 66) is annular and surrounds an opening therein and the elastomeric seal (15, 59, 70) is disposed at the inner periphery of the retainer (12, 54, 66) for sealing the opening.

5. An elastomeric seal assembly according to claim 4, wherein the retainer opening (38) is circular and the seal assembly (10) can seal a cylindrical shaft disposed in the opening (38).

6. An elastomeric seal assembly according to anyone of claims 1 to 5, wherein the shim layers (20, 56, 68) and the substrate section (16) are metal.

7. An elastomeric seal assembly according to anyone of claims 1 to 5, wherein the shim layers (20, 56, 68) and the substrate section (16) are plastics.

8. An elastomeric seal assembly according to claim 1, wherein the retainer (12, 54, 66) is a thin plate-like member and each of the shim layers (20, 56, 68) is a similarly shaped thin plate member of lesser thickness than the substrate section (16).

9. An elastomeric seal assembly according to claim 8, wherein the seal assembly (10, 50, 65) is annular and cam seal an annular opening and the elastomeric seal (15, 59, 70) is positioned at the inner periphery of the retainer (12, 54, 66) and is bonded to each of the shim layers (20, 56, 68) and to the substrate section (16, 55).

## Patentansprüche

1. Dichtungsaufbau (10, 50, 65) aus Elastomeren, der in einen Zwischenraum zwischen komplementären Flächen (23, 26) einer zu dichtenden Vorrichtung (22, 25) gesetzt werden soll und der einen Halter (12, 54, 66) und eine mit diesem in

Kombination verbundene Elastomerdichtung (15, 59, 70) aufweist, wobei der Zwischenraum ein vorgegebenes Zwischenraum-Nennmaß (30) besitzt, der Halter (12, 54, 66) ein Substratteil (16) solcher Form besitzt, daß es den Zwischenraum ausfüllt und ein Zwischenteil zwischen den komplementären Flächen (23, 26) bildet, und die Dicke des Substratteils (16) im wesentlichen mit dem Zwischenraum-Nennmaß (30) übereinstimmt, dadurch gekennzeichnet, daß

Toleranzen des Zwischenraummaßes ein maximales Zwischenraummaß (32) zulassen, das größer ist als das Zwischenraum-Nennmaß, und ein minimales Zwischenraummaß (34), das kleiner ist als das Zwischenraum-Nennmaß (30),

die Dicke der aus einem Elastomer bestehenden Dichtung (15, 59, 70) größer ist als das maximale Zwischenraummaß (32) und nicht größer, als daß eine geeignete Abdichtung bei minimalem Zwischenraummaß (34) gewährleistet ist, und

der Halter (12, 54, 66) außerdem ein Ausgleichsteil (18) aufweist, das eine Mehrzahl von auswechselbar miteinander verbundenen Ausgleichsschichten (20, 56, 68) umfaßt und das auswechselbar mit dem Substratteil (16) verbunden ist und eine solche Dicke hat, daß die Gesamtdicke von Substratteil (16) und Ausgleichsteil (18) anfänglich im wesentlichen mit dem maximalen Zwischenraummaß (32) übereinstimmt, und daß mindestens eine der Ausgleichsschichten (20, 56, 68) abgezogen werden kann, um die Gesamtdicke nach Bedarf bis auf das minimale Zwischenraummaß (32) herabsetzen zu können.

2. Dichtungsaufbau aus Elastomeren, nach Anspruch 1, dadurch gekennzeichnet, daß die Elastomerdichtung (15, 59, 70) sowohl mit dem Substratteil (16) als auch mit dem Ausgleichsteil (18) verbunden ist.

3. Dichtungsaufbau aus Elastomeren, nach Anspruch 2, dadurch gekennzeichnet, daß die Elastomerdichtung (15, 59, 70) eine angeformte Dichtung ist und mit dem Substratteil (16) und dem Ausgleichsteil (18) verklebt ist.

4. Dichtungsaufbau aus Elastomeren, nach Anspruch 1, dadurch gekennzeichnet, daß der Halter (12, 54, 66) ringförmig ist und eine Halteröffnung umgibt, und daß die Elastomerdichtung (15, 59, 70) am Innenrand des Halters (12, 59, 70) zum Abdichten der Öffnung angeordnet ist.

5. Dichtungsaufbau aus Elastomeren, nach Anspruch 4, dadurch gekennzeichnet, daß die Halteröffnung (38) kreisförmig ist und der Dichtungsaufbau (10) eine in der Öffnung (38) angeordnete zylindrische Welle ahzudichten vermag.

6. Dichtungsaufbau aus Elastomeren, nach einem der Ansprüche 1 bis 5, dadurch gekennzeichnet, daß die Ausgleichsschichten (20, 56, 68) und das Substratteil (16) aus Metall bestehen.

7. Dichtungsaufbau aus Elastomeren, nach einem der Ansprüche 1 bis 5, dadurch gekennzeichnet, daß die Ausgleichsschichten (20, 56, 68) und das Substratteil (16) aus Kunststoff bestehen.

8. Dichtungsaufbau aus Elastomeren, nach Anspruch 1, dadurch gekennzeichnet, daß der Halter (12, 54, 66) ein dünnes plattenartiges Element darstellt und jede Ausgleichsschicht (20, 56, 68) ein ebenso geformtes dünnes Plattenelement darstellt, dessen Dicke geringer ist als die des Substratteils (16).

9. Dichtungsaufbau aus Elastomeren, nach Anspruch 8, dadurch gekennzeichnet, daß der Dichtungsaufbau (10, 50, 65) Ringform hat und eine Kreisöffnung abzudichten vermag, und daß die Elastomerdichtung (15, 59, 70) am Innenrand des Halters (12, 54, 66) angeordnet und mit jeder Ausgleichsschicht (20,56,68) und mit dem Substratteil (16, 55) verklebt ist.

**Revendications**

1. Assemblage d'étanchéité en élastomère (10, 50, 65) destiné à être placé dans un intervalle entre faces complémentaires (23, 26) d'un dispositif (22, 25) devant être scellé et comprenant un élément de retenue (12, 54, 66) et un joint d'étanchéité en élastomère (15, 59, 70) reliés ensemble en combinaison, l'intervalle présentant une dimension nominale (30), l'élément de retenue (12, 54, 66) comprenant une partie de substrat (16) de configuration telle, qu'elle s'adapte dans l'intervalle pour former une interface entre les faces complémentaires (23, 26) et la partie de substrat (16), cette interface présentant une épaisseur exactement égale à la dimension nominale (30) de l'intervalle (30), assemblage caractérisé en ce que les tolérances de dimension de l'intervalle offrent la possibilité d'une dimension d'intervalle maximum (32) supérieure à la dimension d'intervalle nominale, et la possibilité d'une dimension d'intervalle minimum (34) inférieure à la dimension d'intervalle nominale (30) ; le joint d'étanchéité en élastomère (15, 59, 70) présente une épaisseur plus grande que la dimension d'intervalle maximum (32) et pas plus grande que celle permettant d'obtenir une étanchéité convenable pour la dimension d'intervalle minimum (34) ; et l'élément de retenue (12, 54, 66) comprend en outre une partie de cale (18), cette partie de cale (18) étant constituée d'un certain nombre de couches de cale (20, 56, 68) reliées ensemble de manière amovible et la partie de cale (18) étant reliée de manière amovible à la partie de substrat (16) et présentant une épaisseur telle, que l'épaisseur totale de la partie de substrat (16) et de la partie de cale (18) soit initialement exactement égale à la dimension d'intervalle maximum (32), et qu'on puisse peler une ou plusieurs des couches de cale (20, 56, 68) pour réduire l'épaisseur totale suivant les besoins, jusqu'à la dimension d'intervalle minimum (32).

2. Assemblage d'étanchéité en élastomère selon la revendication 1, caractérisé en ce que le joint d'étanchéité en élastomère (15, 59, 70) est relié à la fois à la partie de substrat (16) et à la partie de cale (18).

3. Assemblage d'étanchéité en élastomère selon la revendication 2, caractérisé en ce que le joint d'étanchéité en élastomère (15, 59, 70) est un joint moulé sur place et en ce que ce joint est collé à la partie de substrat (16) et à la partie de cale (18).

4. Assemblage d'étanchéité en élastomère selon la revendication 1, caractérisé en ce que l'élément de retenue (12, 54, 66) est annulaire et entoure une ouverture ménagée dans celui-ci, le joint d'étanchéité en élastomère (15, 59, 70) étant disposé sur le pourtour intérieur de l'élément de retenue (12, 54, 66) pour fermer l'ouverture de manière étanche.

5. Assemblage d'étanchéité en élastomère selon la revendication 4, caractérisé en ce que l'ouverture (38) de l'élément de retenue est circulaire, et en ce que l'assemblage d'étanchéité (10) peut assurer l'étanchéité d'un arbre cylindrique placé dans l'ouverture (38).

6. Assemblage d'étanchéité en élastomère selon l'une quelconque des revendications 1 à 5, caractérisé en ce que les couches de cale (20, 56, 68) et la partie de substrat (16) sont en métal.

7. Assemblage d'étanchéité en élastomère selon l'une quelconque des revendications 1 à 5, caractérisé en ce que les couches de cale (20, 56, 68) et la partie de substrat (16) sont en matière plastique.

8. Assemblage d'étanchéité en élastomère selon la revendication 1, caractérisé en ce que l'élément de retenue (12, 54, 66) est un élément en forme de plaque mince, et en ce que chacune des couches de cale (20, 56, 68) est un élément de plaque mince formé de la même manière, de moins grande épaisseur que la partie de substrat (16).

9. Assemblage d'étanchéité en élastomère selon la revendication 8, caractérisé en ce que l'assemblage d'étanchéité (10, 50, 65) est annulaire et peut assurer l'étanchéité d'une ouverture annulaire, et en ce que le point d'étanchéité en élastomère (15, 59, 70) est placé sur le pourtour intérieur de l'élément de retenue (12, 54, 66) et se colle à chacune des couches de cale (20, 56, 68) et à la partie de substrat (16, 55).

**Fig. 1**

25 26 32 34 45 12 16 10 36 43 22 23 30 11 20 48 18 38 15 42 46 40

**Fig. 2**

50 52 51 3 3 52

**Fig. 3**

52 50 54 55 56 58 60 59 51

**Fig. 4**

66 65 68 89 70